# FASCICULE DE BREVET EUROPEEN

(11) **EP 0 611 728 B1**
(45) Date de publication et mention de la délivrance du brevet: **03.09.1997**
(21) Numéro de dépôt: 94101931.7
(22) Date de dépôt: 08.02.1994
(51) Int. Cl.: C02F 3/12

(54) **Installation et procédé pour l'épuration biologique des eaux d'écoulement**
Vorrichtung und Verfahren zur biologischen Abwasserreinigung
Installation and process for biological waste water purification

(30) Priorité: 19.02.1993 IT TO930114
(43) Date de publication de la demande: 24.08.1994
(73) Titulaire: GIMAR TECNO S.p.A., I-15040 Occimiano (Alessandria) (IT)
(72) Inventeur: Francia, Giancarlo, I-15033 Casale Monferrato, (Alessandria) (IT); Vairo, Franco, I-15033 Casale Monferrato, (Alessandria) (IT)
(74) Mandataire: Rambelli, Paolo

(56) Documents cités:
- EP-A- 0 120 772
- EP-A- 0 302 030
- EP-A- 0 351 148
- DE-A- 1 950 787
- DE-A- 4 119 718
- FR-A- 2 265 688

## Description

La présente invention concerne une installation et un procédé d'épuration biologique des eaux résiduaires par digestion aérobie de boues activées.

L'invention est plus particulièrement destinée à résoudre les problèmes inhérents à l'épuration des eaux résiduaires, dont la production et l'émission dans le milieu environnant sont de nature discontinue ou périodique et dont la teneur en BOD et COD est extrêmement variable dans le temps, comme c'est par exemple notamment le cas pour les effluents d'installations industrielles ou artisanales de vinification. Comme on le sait, le processus de vinification se déroule à des périodes bien déterminées de l'année, et les différentes phases du processus de vinification entraînent la nécessité d'évacuer, durant des laps de temps limités, les eaux résiduaires se caractérisant par des teneurs extrêmement élevées en BOD et COD. Le volume de ces effluents est par ailleurs bien évidemment fonction de facteurs extérieurs, qui varient d'une année sur l'autre et qui sont difficilement prévisibles, tels que la production annuelle.

Les installations connues et actuellement en service, qui se composent des bassins d'aération habituels, normalement enterrés et qui se caractérisent par des coûts d'investissement et des frais fixes élevés, font preuve, de par leur nature même, d'une souplesse qui laisse beaucoup à désirer quant à leur aptitude à supporter les fluctuations des débits d'alimentation. Ceci oblige à les surdimensionner, ce qui augmente notablement les coûts, sans qu'une telle mesure permette pour autant d'obtenir la fiabilité qui s'impose.

La présente invention a pour but de proposer une installation particulièrement simple et économique permettant d'obtenir un rendement d'épuration élevé même en présence de pointes dans la teneur en BOD et COD des effluents à traiter.

Pour réaliser cet objectif, l'invention propose une installation et un procédé d'épuration des effluents de la vinification tels que décrits dans les revendications 1 et 7.

La description détaillée qui suit, qui s'appuie sur les planches de dessins ci-jointes, permettra de mieux comprendre les avantages et les particularités de l'installation suivant l'invention. Les différentes figures représentent respectivement:
Figure 1 - L'installation, en représentation schématique, vue de l'avant.
Figure 2 - L'installation correspondant à la figure 1, vue en plan.
Figure 3 - Une variante de configuration de l'installation, en représentation schématique, vue de l'avant.

Comme le montrent les figures, l'installation se compose d'un ensemble de récipients modulaires respectivement désignés par les chiffres 1 à 4 . Chacun d'eux comporte un fond plat ou bombé et est ouvert à sa partie supérieure. Chacun de ces récipients est réalisé en matière plastique composite, en polyester armé de fibres par exemple, et est monté sur une plate-forme commune reposant sur le sol. L'utilisation de ces récipients modulaires présente le gros avantage de ce qu'il est possible de faire varier la hauteur de chaque récipient dans une proportion importante, ce qui permet de respecter les temps de résidence requis par le processus d'épuration. L'installation peut donc ainsi comporter des récipients modulaires de différentes hauteurs, la hauteur maximale étant généralement de l'ordre de 12 mètres. Un autre avantage de cette installation réside dans son encombrement limité dans le plan horizontal et dans la possibilité de faire varier et d'adapter la disposition des différents récipients dans l'espace en fonction de la place dont on dispose.

Chaque récipient est doté de dispositifs d'aération 5 , placés au voisinage du fond, qui insufflent de l'air depuis le fond au travers de la masse d'effluents à traiter. Ces dispositifs d'insufflation d'air, munis de vannes de régulation de débit, sont constitués par exemple par une membrane poreuse.

Chaque récipient est, de préférence, muni de moyens de conditionnement qui, suivant un mode de réalisation préféré de l'invention, se présentent sous la forme d'un serpentin, non représenté sur les schémas, faisant partie intégrante de la paroi du récipient et entourant sa surface latérale, qui véhicule un fluide vecteur thermique destiné à maintenir la température des effluents, lors du processus de digestion, à des valeurs généralement comprises entre 5 et 30°C, y compris durant les périodes hivernales.

L'installation comporte un premier récipient 1 appelé récipient d'homogénéisation, dans lequel les effluents, en provenance d'une fosse de récupération 6 , sont alimentés par une conduite de refoulement 7 , qui débouche près du fond ou près des dispositifs d'insufflation d'air, dans des conditions telles que les effluents soient placés au contact d'oxygène dès qu'ils pénètrent dans le récipient. Le récipient d'homogénéisation, dont le niveau de remplissage varie en fonction du débit d'alimentation d'effluents, joue un rôle important notamment dans les cas où les teneurs en BOD ou COD des effluents varient par paliers dans le temps, évitant ainsi les phénomènes de choc qui pourraient avoir une incidence préjudiciable sur le bon déroulement du processus de digestion aérobie dans les récipients suivants.

Une conduite de refoulement 8 , raccordée à une pompe immergée 9 , achemine les effluents du récipient d'homogénéisation au premier récipient de la batterie de digesteurs, identifié par le repère 2 , par l'intermédiaire d'une conduite descendante 10 qui débouche au voisinage du fond du récipient 2 . Chacun des récipients modulaires 2 , 3 et 4 est raccordé en série au récipient suivant par l'intermédiaire de dispositifs de transfert à déversoir 11 . Le niveau des effluents dans ces récipients reste donc constant en dépit des variations du débit d'alimentation. Les effluents en provenance du récipient 4 sont déversés dans un récipient terminal 12 faisant office de bassin de décantation. Le récipient terminal 12 peut avoir une configuration identique à celle des récipients 1 à 4 , mais il est de préférence muni d'un fond conique, disposition qui facilite le processus de décantation des boues.

Du récipient de décantation 12 , les effluents clarifiés sont évacués par une conduite 13 , cependant que les boues sont extraites du fond du récipient par une conduite 14 et envoyées dans un système de filtration 15 .

Le récipient de décantation 12 comporte, avantageusement, une conduite de recyclage 17 qui, à l'aide d'une pompe immergée 16 , permet d'effectuer le recyclage d'une partie au moins des boues décantées dans un des récipients de digestion.

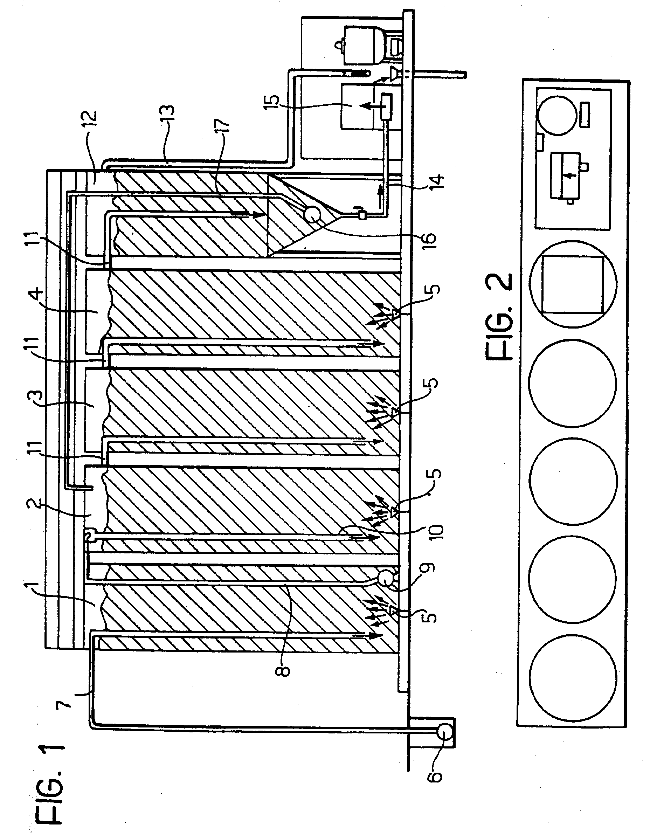

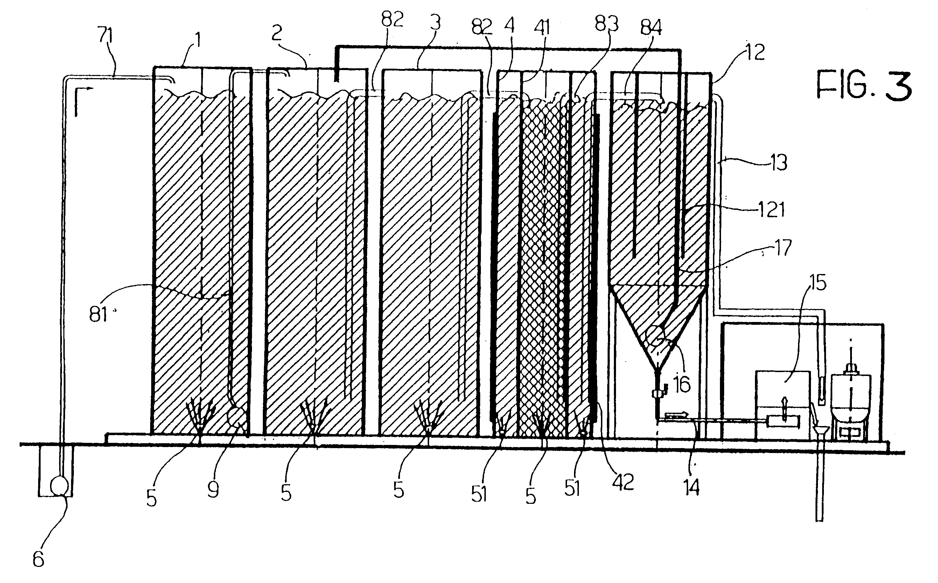

La figure 3 illustre un autre mode de réalisation de l'installation d'épuration, dans lequel les éléments identiques à ceux déjà représentés aux figures 1 et 2 sont repérés par les mêmes numéros.

L'installation illustrée à la figure 3 diffère de celle représentée aux figures 1 et 2 essentiellement sur les points suivants. L'alimentation dans le récipient d'homogénéisation 1 des effluents en provenance de la fosse de récupération 6 s'effectue par l'intermédiaire d'une conduite 71 qui débouche à la partie supérieure du récipient 1 et les effluents sont transférés, depuis ce récipient, au premier récipient de digestion 2 par l'intermédiaire de la pompe 9 qui aspire les effluents au niveau du fond, et par une conduite 81 qui débouche à la partie supérieure du récipient 2 . Les effluents sont ensuite acheminés dans les récipients suivants par l'intermédiaire des conduites 82 qui prélèvent les effluents au niveau du fond de chaque récipient et les véhiculent jusqu'à la partie supérieure du suivant. On réalise ainsi un cheminement à contre-courant entre les effluents et le flux d'air ou d'oxygène insufflé dans la masse depuis le fond.

Le récipient de digestion 4 est du type à double étage et comporte une enveloppe tubulaire intérieure 41 , disposée suivant le même axe que celui du récipient 4 , dans laquelle sont envoyés les effluents en provenance du deuxième récipient de digestion par l'intermédiaire de la conduite 82 . Depuis l'intérieur de cette enveloppe 41 , les effluents sont envoyés, par l'intermédiaire d'une conduite 83 , dans l'enceinte annulaire qui se trouve entre le récipient 4 et l'enveloppe 41 . D'autres dispositifs d'aération 51 sont prévus au niveau du fond de cette enceinte annulaire pour insuffler de l'air dans celle-ci.

Suivant un mode de réalisation préféré de l'invention, le récipient 4 au moins est muni de dispositifs de conditionnement, tels que par exemple une chemise 42 à l'intérieur de laquelle est disposé un serpentin dans lequel circule un fluide chauffant.

Les effluents sont en dernier lieu transférés par une conduite 84 à la partie supérieure du récipient de décantation 12 qui, dans le présent cas de figure, comporte un élément tubulaire 121 disposé coaxialement par rapport au récipient constituant le décanteur, à l'intérieur duquel débouche la conduite d'alimentation 84 . Les boues activées décantées sont recyclées depuis le récipient de décantation dans un des récipients de digestion.

Il va de soi que l'installation pourra être équipée d'appareils de régulation et de contrôle, qui sont des dispositifs en soi connus, pour le contrôle des paramètres du processus, tels que la température de digestion, le débit d'insufflation d'air, la durée de séjour et les valeurs de BOD et COD dans les effluents bruts et les effluents traités.

Le procédé d'épuration suivant l'invention se caractérisé par le fait qu'il se présente sous la forme d'un ensemble de stades de digestion réalisés dans des récipients à disposition verticale, avec insufflation dans les effluents à traiter d'un gaz renfermant de l'oxygène moléculaire, et comprenant au moins une étape d'homogénéisation, caractérisé par le fait que le niveau des effluents dans le récipient où ce processus s'effectue, est variable en fonction du débit d'alimentation des effluents, et une ou plusieurs phases de digestion, et caractérisé par le fait que le niveau des effluents dans les récipients correspondants est maintenu substantiellement constant malgré les fluctuations du débit d'alimentation des effluents.

On a constaté qu'en conduisant l'opération de façon à maintenir, dans au moins un ou plusieurs des récipients de digestion, une concentration en oxygène dissous supérieure à 3 ppm, on pouvait recycler, depuis le décanteur, dans les récipients de digestion, la totalité des boues de digestion aérobie , en évitant ainsi la formation de boues excédentaires qu'il serait, s'il en était autrement, nécessaire de digérer. Dans de telles conditions on obtient par ailleurs une diminution substantielle des nitrites présents dans les effluents, qui sont en l'occurrence transformés en nitrates par oxydation.

Pour ce faire, le débit d'insufflation d'air dans les récipients de digestion est réglé de façon à maintenir dans au moins un de ceux-ci une teneur en oxygène dissous supérieure à 3 ppm, de préférence supérieure à 5 et comprise entre 5 et 10 ppm.

Les temps de séjour des effluents dans i'installation suivant l'invention sont généralement compris entre 6 et 40 jours, la durée préférentielle se situant entre 6 et 20 jours.

Le récipient d'homogénéisation 1 dans lequel le niveau d'effluents varie en fonction du débit d'alimentation, est équipé d'indicateurs de niveau, non représentés sur les schémas, qui sont utilisés conjointement à un dispositif de contrôle et de commande pour déterminer l'augmentation du débit d'alimentation des récipients de digestion et du débit d'insufflation d'air qu'il y a lieu de prévoir lorsque le niveau, par suite d'une augmentation du débit d'alimentation des effluents, dépasse un seuil prédéterminé. Le débit d'insufflation d'air est réglé en fonction du niveau dans le récipient d'homogénéisation de manière à maintenir les teneurs en oxygène dissous stipulées dans ce qui précède.

Le fait que l'installation soit, suivant l'invention, réalisée suivant le principe de la conception modulaire, permet de réaliser une épuration efficace, disposition qui confère à l'installation la souplesse nécessaire pour traiter des effluents, dont les teneurs en BOD et/ou en COD varient par paliers, permettant par ailleurs de réaliser des économies substantielles au niveau de la gestion du processus.

### Exemple

On a utilisé une installation correspondant à la configuration décrite à la figure 3, comprenant:
- un récipient d'homogénéisation de 3 m de diamètre et de 10 m de hauteur,
- deux récipients de digestion de 3 m de diamètre et de 10 m de hauteur, acceptant chacun un volume d'effluents de 70 m³,
- Un récipient de digestion à double étage, se composant d'une enveloppe extérieure de 3 m de diamètre et 10 m de hauteur et d'une enveloppe intérieure de 2 m de diamètre, l'enveloppe intérieure ayant un volume d'effluents de 37 m³ et l'enveloppe extérieure un volume de 33 m³,
- un décanteur à fond conique d'un diamètre de 2,3 m.

Les différents récipients étaient reliés entre eux comme indiqué à la figure 3.

Le récipient d'homogénéisation était alimenté en eaux résiduaires du processus de vinification suivant un débit Q de 30 m³/jour, avec un facteur de charge organique F_{c} (exprimé par BOD5 · Q/M · 10³ , équation dans laquelle M représente la masse de matières solides totales en suspension, en kg) de 0,151 et une teneur en COD de 5010 mg/l. La durée de séjour déterminée par calcul est de 168 heures, avec une température d'environ 10°C dans les récipients de digestion Le débit d'insufflation d'air dans les récipients de digestion est réglé de façon à obtenir, dans les récipients 3 et 4, une teneur en oxygène dissous de 9 ppm environ.

On a en l'occurrence travaillé avec un recyclage total des boues en provenance du décanteur dans le récipient 2 , sans obtenir de boues en excédent, et en obtenant en régime de fonctionnement normal un COD de sortie de 41 mg/l.

On a ensuite traité dans l'installation un débit d'effluents de 10 m3/jour, pour un F_{c} de 0,036 et un COD à l'entrée de 2800 mg/l.; temps de séjour déterminé par calcul: 504 heures environ. Le débit d'insufflation d'air a été réglé de manière à obtenir dans les récipients (3) et (4) une teneur en oxygène dissous de 7 et 9 respectivement. L'installation fonctionnant avec un recyclage total des boues, on n'a pas obtenu de boues excédentaires et le COD de sortie était de 40 mg/l.

Le procédé et l'installation selon l'invention sont ainsi déstinés pour le traitment des effluents de caves de vinification constitués par des solutions aqueuses comprenant des alcools, des aldéhydes, des sucres, des colorants, des tannins, des tartrates, avec une teneur en COD compris entre 1.000 et 40.000 mg/l et en moyenne entre 2.500 et 8.000 mg/l.

## Revendications

1. Installation d'épuration d'eaux résiduaires par digestion aérobie de boues activées, composée d'un ensemble de récipients modulaires (1-4), à disposition verticale les récipients modulaires (1-4) étant munis chacun de dispositifs d'aération (5) des effluents et de moyens de raccordement (8, 10, 11), pour transférer les effluents en série d'un desdits récipients dans le récipient suivant, caractérisée par le fait que ledit ensemble de récipients modulaires (1-4) comporte:
- un premier récipient d'homogénéisation (1) muni de moyens d'aération disposés au voisinage du fond (5),
- un ensemble de récipients de digestion (2-4) équipés chacun desdits moyens d'aération indépendants et comportant des moyens d'évacuation (11) permettant de maintenir dans chacun des récipients en question un niveau de fluide constant,
ladite installation comportant des indicateurs de niveaux associés au récipient d'homogénéisation et un dispositif de contrôle et de commande utilisant les valeurs fournies par ces indicateurs pour régler le débit d'alimentation des récipients de digestion et le débit d'aération dans lesdits récipients de digestion, en fonction du niveau d'effluents dans le récipient d'homogénéisation,
des moyens de pompe (9) étant prévus pour transférer le liquide dudit premier récipient d'homogénéisation (1) dans les récipients de digestion (2-4).

2. Installation selon la revendication 1, caractérisée par le fait que chacun des récipients est réalisé en polyester armé de fibres.

3. Installation selon l'une des revendications 1 ou 2, caractérisée par le fait que chaque récipient de conception modulaire est équipé de moyens de conditionnement constitués par un serpentin intégré dans la paroi du récipient et entourant sa surface latérale, pouvant être alimenté par un fluide de conditionnement.

4. Installation suivant l'une quelconque des revendications précédentes, caractérisée par le fait qu'elle comporte un récipient terminal de décantation (12) pour la décantation des boues, muni de dispositifs de recyclage (16, 17) permettant d'effectuer le recyclage d'une partie au moins des boues décantées dans un des récipients de digestion en question.

5. Installation selon la revendication 1, caractérisée par le fait que les moyens d'acheminement des effluents du récipient d'homogénéisation dans le récipient de digestion suivant comportent une pompe immergée à l'intérieur de la fraction liquide dans le récipient d' homogénéisation.

6. Installation selon l'une des revendications précédentes caractérisée par le fait qu'au moins un des récipients de digestion (2-4) en question se présente sous la forme d'un récipient à double corps constitué par une enveloppe tubulaire intérieure et une enveloppe tubulaire extérieure coaxiale.

7. Procédé d'épuration, par digestion aérobie des effluents de la vinification, caractérisé par le fait qu'il se déroule en un certain nombre d'étapes réalisées dans des récipients à disposition verticale selon les revendications 1 à 6, avec insufflation dans les effluents de gaz renfermant de l'oxygène moléculaire depuis la partie inférieure du récipient, et comprenant au moins un premier stade d'homogénéisation, dans lequel le niveau d'effluents dans le récipient correspondant varie en fonction du débit d'alimentation des effluents et une ou plusieurs phases de digestion, dans laquelle le niveau d'effluents dans le récipient correspondant est maintenu substantiellement constant malgré des variations du débit d'alimentation des effluents, le débit d'alimentation dans les récipients digesteurs et le débit d'insufflation d'air dans ledit ou lesdits récipients de digestion étant réglés proportionnellement au niveau des effluents dans ledit stade d'homogénéisation, de façon à maintenir dans au moins une des phases de digestion une teneur en oxygène dissous supérieure à 3 ppm.

8. Procédé selon la revendication 7, comprenant une phase de décantation des effluents pour la séparation des boues de digestion et dans lequel au moins une partie des boues décantées est recyclée dans l'une desdites phases de digestion.

9. Procédé selon la revendication 8, caractérisé par le fait que le flux d'insufflation d'air ou de gaz renfermant de l'oxygène dans une ou plusieurs des phases de digestion permet de maintenir une teneur en oxygène dissous comprise entre 5 et 10 ppm dans au moins une des phases de digestion en question.

10. Procédé selon la revendication 9, caractérisé par le fait que la totalité des boues séparées lors de la décantation est recyclée dans une des phases de digestion et par le fait qu'au niveau de la phase au sein de laquelle est effectué ce recyclage ou d'une phase située en aval de celle-ci, le débit d'insufflation d'air permet de maintenir une teneur en oxygène dissous supérieure à 5 ppm.

## Claims

1. An installation for the purification of residuary waters by aerobic digestion of activated muds, comprising a series of vertically disposed modular receptacles (1-4), each of the modular receptacles (1-4) being provided with devices (5) for aerating effluents and linking means (8, 10, 11) for transferring the effluents in series from one of the said receptacles to the subsequent receptacle, characterised in that the said series of modular receptacles (1-4) comprises :
- a first homogenisation receptacle (1) provided with aeration means disposed in the vicinity of the base (5),
- a series of digestion receptacles (2 - 4) each fitted with independent aerating means and having discharge means (11) allowing each of the receptacles in question to be kept at a constant fluid level,
the said installation having level indicators linked to the homogenisation receptacle and a monitoring and control device which uses the values supplied by these indicators to regulate the flow supply to the digestion receptacles and the aeration rate in the said digestion receptacles depending on the level of effluents in the homogenisation receptacle,
pumping means (9) being provided in order to transfer the liquid from the said first homogenisation receptacle (1) to the digestion receptacles (2-4).

2. An installation as claimed in claim 1, characterised in that each of the receptacles is made from fibre-reinforced polyester.

3. An installation as claimed in one of claims 1 or 2, characterised in that each receptacle of modular design is fitted with conditioning means consisting of a coil integrated in the wall of the receptacle and surrounding the lateral surface thereof, into which a conditioning fluid can be fed.

4. An installation as claimed in any one of the preceding claims, characterised in that it incorporates an end-of-line decantation receptacle (12) for decanting the muds, provided with recycling devices (16, 17) so that at least some of the decanted muds can be recycled to one of the digestion receptacles in question.

5. An installation as claimed in claim 1, characterised in that the means for conveying the effluents from the homogenisation receptacle into the next digestion receptacle is a pump submersed within the liquid fraction in the homogenisation receptacle.

6. An installation as claimed in one of the preceding claims, characterised in that at least one of the digestion receptacles (2-4) in question is designed as a double-bodied receptacle consisting of an inner tubular casing and a coaxial, external tubular casing.

7. A method for purifying effluents from wine-making by aerobic digestion, characterised in that it is performed in a certain number of stages in vertically disposed receptacles as claimed in claims 1 to 6, whereby gas containing oxygen molecules is blasted in the effluents from the lower part of the receptacle, and comprising at least a first stage of homogenisation in which the level of effluents in the corresponding receptacle varies with the delivery rate of the effluents, and one or several digestion stages, in which the level of effluents in the relevant receptacle is kept substantially constant in spite of variations in the delivery rate of the effluents, whereby the delivery rate to the digester receptacles and the rate of air blast into the said digestion receptacle or receptacles are regulated in proportion to the level of effluents in the homogenisation stage so as to maintain a dissolved oxygen content in excess of 3 ppm in at least one of the digestion stages.

8. A method as claimed in claim 7, incorporating a stage in which the effluents are decanted in order to separate digestion muds and at least a proportion of the decanted muds is recycled to one of the said digestion stages.

9. A method as claimed in claim 8, characterised in that the blast of air or gas flow containing oxygen in one or more of the digestion stages is used to maintain a dissolved oxygen content of between 5 and 10 ppm in at least one of the digestion stages in question.

10. A method as claimed in claim 9, characterised in that all the muds separated during decantation are recycled to one of the digestion stages and the rate of air blast at the stage to which recycling is effected or at a stage located downstream thereof allows the dissolved oxygen content to be maintained at a level in excess of 5 ppm.

## Patentansprüche

1. Anlage zur Abwasserreinigung durch aerobe Zersetzung von Belebtschlamm, die aus einer Gruppe modularer Behälter (1-4) mit vertikaler Anordnung besteht, wobei die modularen Behälter (1-4) jeweils mit Vorrichtungen zur Belüftung (5) der Abwässer und mit Verbindungsmitteln (8, 10, 11) versehen sind, um die Abwässer nacheinander von einem dieser Behälter in den folgenden Behälter zu überführen, dadurch gekennzeichnet, daß die Gruppe modularer Behälter (1-4) aufweist:
- einen ersten Behälter zur Homogenisierung (1), der mit Belüftungsmitteln versehen ist, die nahe dem Boden (5) angeordnet sind,
- eine Gruppe von Faulbehältern (2-4), die jeweils mit gesonderten Belüftungsmitteln ausgestattet sind und Mittel zur Entleerung (11) aufweisen, welche die Aufrechterhaltung eines konstanten Flüssigkeitspegels in jedem der betreffenden Behälter ermöglichen,
wobei die Anlage mit dem Homogenisierungsbehälter verbundene Pegelmesser und eine Kontroll- und Steuervorrichtung aufweist, welche die von diesen Pegelmessern gelieferten Werte zur Regelung der Zufuhrmenge der Faulbehälter und der Belüftungsleistung in diesen Faulbehältern in Abhängigkeit von dem Pegel der Abwässer in dem Homogenisierungsbehälter verwendet,
wobei Pumpmittel (9) vorgesehen sind, um die Flüssigkeit des ersten Homogenisierungsbehälters (1) in die Faulbehälter (2-4) zu überführen.

2. Anlage nach Anspruch 1, dadurch gekennzeichnet daß jeder der Behälter aus faserverstärktem Polyester hergestellt ist.

3. Anlage nach einem der Ansprüche 1 oder 2, dadurch gekennzeichnet, daß jeder Behälter von modularer Bauart mit Mitteln zur Klimatisierung ausgestattet ist, die aus einer in die Wand des Behälters eingebauten und seine Seitenfläche umgebenden Rohrschlange bestehen, die mit einem Klimatisierungsmedium gespeist werden kann.

4. Anlage nach einem der vorhergehenden Ansprüche, dadurch gekennzeichnet, daß sie einen Dekantier-Endbehälter (12) zur Dekantierung der Schlämme aufweist, der mit Rückführungsvorrichtungen (16, 17) versehen ist, welche die Rückführung wenigstens eines Teils der dekantierten Schlämme in einen der betreffenden Faulbehälter ermöglichen.

5. Anlage nach Anspruch 1, dadurch gekennzeichnet, daß die Mittel zur Leitung der Abwässer aus dem Homogenisierungsbehälter in den folgenden Faulbehälter eine Pumpe umfassen, die in die flüssige Fraktion in dem Homogenisierungsbehälter eingetaucht ist.

6. Anlage nach einem der vorhergehenden Ansprüche, dadurch gekennzeichnet, daß mindestens einer der betreffenden Faulbehälter (2-4) in Form eines Behälters mit doppeltem Körper vorliegt, der von einer inneren röhrenförmigen Hülle und einer koaxialen äußeren röhrenförmigen Hülle gebildet wird.

7. Verfahren zur Reinigung von Abwässern aus der Weinerzeugung durch aerobe Zersetzung, dadurch gekennzeichnet, daß es in einer bestimmten Anzahl von Schritten abläuft, die in Behältern mit vertikaler Anordnung gemäß den Ansprüchen 1 bis 6 durchgeführt werden, wobei von dem unteren Teil des Behälters her in die Abwässer Gas eingeblasen wird, das molekularen Sauerstoff enthält, wobei das Verfahren mindestens eine erste Stufe der Homogenisierung, bei welcher der Pegel der Abwässer in dem entsprechenden Behälter in Abhängigkeit von der Abwasserzufuhrmenge schwankt, und eine oder mehrere Phasen der Faulung umfaßt, in welcher der Pegel der Abwasser in dem entsprechenden Behälter trotz der Schwankungen der Abwasserzufuhrmenge im wesentlichen konstant gehalten wird, wobei die Zufuhrmenge in die Faulbehälter und die in den oder die Faulbehälter eingeblasene Luftmenge proportional zum Pegel der Abwässer in der Homogenisierungsstufe geregelt werden, so daß in mindestens einer der Faulphasen ein Gehalt an gelöstem Sauerstoff von mehr als 3 ppm aufrechterhalten wird.

8. Verfahren nach Anspruch 7, das eine Phase der Dekantierung der Abwässer zur Abtrennung der Faulschlämme umfaßt und bei dem wenigstens ein Teil der dekantierten Schlämme in eine der Faulphasen zurückgeführt wird.

9. Verfahren nach Anspruch 8, dadurch gekennzeichnet, daß der in einer oder mehreren Faulphasen eingeblasene sauerstoffhaltige Luft- oder Gasstrom die Aufrechterhaltung eines Gehalts an gelöstem Sauerstoff zwischen 5 und 10 ppm in mindestens einer der betreffenden Faulphasen gestattet.

10. Verfahren nach Anspruch 9, dadurch gekennzeichnet, daß die Gesamtheit der bei der Dekantierung abgetrennten Schlämme in eine der Faulphasen zurückgeführt wird und daß in Höhe der Phase, in welche diese Rückführung erfolgt, oder einer Phase, die sich stromabwärts von dieser befindet, die eingeblasene Luftmenge die Aufrechterhaltung eines Gehalts an gelöstem Sauerstoff von mehr als 5 ppm gestattet.
